Europäisches Patentamt

European Patent Office

Office européen des brevets

(19)

(11) Publication number: **0 207 664**
A2

(12) **EUROPEAN PATENT APPLICATION**

(21) Application number: 86304497.0

(22) Date of filing: 12.06.86

(51) Int. Cl.⁴: **G 06 F 9/30**

(30) Priority: 28.06.85 US 750577

(43) Date of publication of application:
07.01.87 Bulletin 87/2

(84) Designated Contracting States:
CH DE FR GB IT LI NL SE

(71) Applicant: Hewlett-Packard Company
P.O. Box 10301
Palo Alto California 94303-0890(US)

(72) Inventor: Baum, Allen J.
2310 Cornell Street
Palo Alto California 94306(US)

(72) Inventor: Mahon, Michael J.
1975 Adele Place
San Jose California 95125(US)

(72) Inventor: Bryg, William R.
18630 Perego Way
Saratoga California 95070(US)

(74) Representative: Colgan, Stephen James et al,
CARPMAELS & RANSFORD 43 Bloomsbury Square
London WC1A 2RA.(GB)

(54) Method and apparatus for depositing bits in a register.

㊿ A method and apparatus are presented for depositing bits in a destination register in accordance with various embodiments of the present invention. Bits within an instruction register specify to an arithmetic logic unit (ALU) a bit source, a number of bits, and a location within the destination register. The ALU within a single instruction cycle time transfers bits from the bit source to the location within the destination register. The source of bits may be another register or an immediate field within the instruction register.

FIG 1

METHOD AND APPARATUS FOR DEPOSITING BITS IN A REGISTER

## Background

Processors within computer systems often contain special instructions for shifting bits within a register either to the right or to the left by a specified number of bits. Additionally, some processors have incorporated instructions which insert a specified number of bits from a source operand to a target operand starting at a rightmost specified bit. To achieve greater efficiency, processors need more versatile means to manipulate bits within a register.

## Summary of the Invention

In accordance with preferred embodiments of the present invention a method and apparatus are presented for depositing bits in a destination register. Bits within an instruction register specify to an arithmetic logic unit (ALU) a bit source, a number of bits, and a location within the destination register. The ALU within a single instruction cycle time transfers bits from the bit source to the location within the destination register. The source of bits may be another register or an immediate field within the instruction register.

## Brief Description of the Drawings

Figure 1 shows an ALU, an instruction format and registers used in performing a deposit of bits according to an embodiment of the present invention.

Figure 2 shows the ALU shown in Figure 1, an instruction format and registers used in performing a deposit of bits

1

according to a second embodiment of the present invention.

Figure 3 shows the ALU shown in Figure 1, an instruction format and registers used in performing a deposit of bits according to a third embodiment of the present invention.

Figure 4 shows the ALU shown in Figure 1, an instruction format and registers used in performing a deposit of bits according to a fourth embodiment of the present invention.

Figure 5 shows the ALU shown in Figure 1, an instruction format and registers used in performing a deposit of bits according to a fifth embodiment of the present invention.

Figure 6 shows the ALU shown in Figure 1, an instruction format and registers used in performing a deposit of bits according to a sixth embodiment of the present invention.

Figure 7 shows the ALU shown in Figure 1, an instruction format and registers used in performing a deposit of bits according to a seventh embodiment of the present invention.

Figure 8 shows the ALU shown in Figure 1, an instruction format and registers used in performing a deposit of bits according to an eighth embodiment of the present invention.

### Description of the Preferred Embodiments

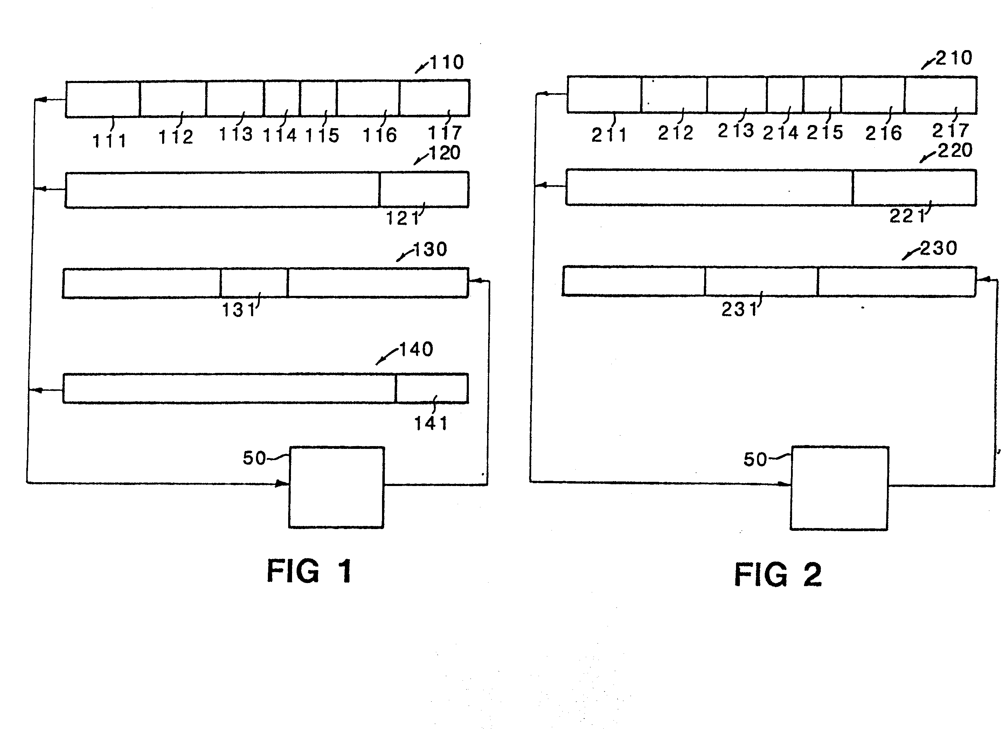

In Figure 1, an ALU 50 processes bit patterns from a register 110 and a register 140 in order to deposit bits from a register 120 into a register 130. Register 110 may, for instance, have 32 bits which are divided into fields. A field 111 contains six bits which designate an operation code, for instance a deposit instruction, which in this case might be $011101_{base2}$.

A field 112 contains a 5-bit address which designates a general register into which will be deposited bits. The 5-bit address in field 112 allows the selection of one general register out of 32. In this case the general register selected is register 130.

A field 113 contains a 5-bit address which designates a second general register which is a source of bits to be deposited. In this case the second general register selected is register 120. Bits selected out of register 120 may be selected from a set location. For instance, a rightmost field 121 within register 120 may be the set location.

A field 114 contains a three-bit condition code. If the condition is "True" then, for example, the following instruction may be nullified. The following table lists exemplary conditions:

## Table 1

| 0 | Never True |
|---|---|
| 1 | True if all bits in register 130 are zero |
| 2 | True if a lowest-order bit of register 130 is one |
| 3 | True if a highest-order bit of register 130 is one |
| 4 | Always True |
| 5 | True if at least one bit in register 130 is not zero |
| 6 | True if the lowest-order bit of register 130 is zero |
| 7 | True if the highest-order bit of register 130 is zero |

A field 115 contains a three-bit code which indicates what type of deposit instruction is being performed. In this case, field 115 indicates that the instruction is a deposit of a variable number of bits. This may be indicated, for example, by field 115 containing bits $001_{base2}$.

A field 116 contains five unused bits. These bits may therefore all be set to zero.

A field 117 contains 5 bits which indicate the number of bits which are deposited from register 120 into register 130. The 5 bits are a complement length, i.e., the value of the bits are subtracted from 32 to give the number of bits which are deposited from register 120 into register 130. For instance, if the bits in field 117 contained the base 2 number 11010 (26 in base 10), then field 121 in register 120 would contain 6 bits ((32 - 26) bits) and a field 131 in register 130 would also contain 6 bits. Field 131 is the location within register 130 into which register 120 deposits bits from field 121.

Register 140 is a register which contains a bit position number representing the bit position of field 131 within register 130. The bit position number is located in a rightmost field 141 within register 140. The bit position number indicates the location of the rightmost bit of field 131 within register 130. For instance, when the rightmost bit number given in field 141 is seventeen, then the rightmost bit of field 131 is in the seventeenth bit position of register 130, where the leftmost bit position of register 130 is the zero bit position and the rightmost bit position of register 130 is the thirty-first bit position.

In Figure 2, ALU 50 processes bit patterns from a register 210 in order to deposit bits from a register 220 into a register 230. Register 210 may, for instance, have 32 bits which are divided into fields. A field 211 contains six bits which designate an operation code, for instance a deposit instruction,

4

which might be encoded as $01101_{base2}$.

A field 212 contains a 5-bit address which designates a general register into which will be deposited bits. The 5-bit address in field 212 allows the selection of one general register out of 32. In this case the general register selected is register 230.

A field 213 contains a 5-bit address which designates a second general register which is a source of bits to be deposited. In this case the second general register selected is register 220. Bits selected out of register 220 may be selected from a set location. For instance, a rightmost field 221 within register 220 may be the set location.

A field 214 contains a three-bit condition code. If the condition is "True" then, for example, the following instruction may be nullified. Table 1 above lists exemplary conditions.

A field 215 contains a three-bit code which indicates what type of deposit instruction is being performed. In this case, field 215 indicates that the instruction is a deposit of a number of bits. This may be indicated, for example, by field 215 containing bits $011_{base\ 2}$.

A field 216 contains five bits used as a bit position number representing the bit position of a field 231 within a register 230. Field 231 is the location within register 230 into which register 220 deposits bits from field 221. The bit position number indicates the location of the rightmost bit of field 231 within register 230. For instance, when the rightmost bit number given in field 216 is nineteen, then the rightmost bit of field 231 is in the nineteenth bit position of register 230, where the leftmost bit position of register 230 is the zero bit position and the rightmost bit position of register 230 is the thirty-first bit position.

A field 217 contains 5 bits which indicate the number of bits which are deposited from field 221 into register 230. For instance, when the bits in field 217 contained the base 2 number 11010 (a complement length), then field 221 in register 220 contains 6 bits and field 231 in register 230 also contains 6 bits.

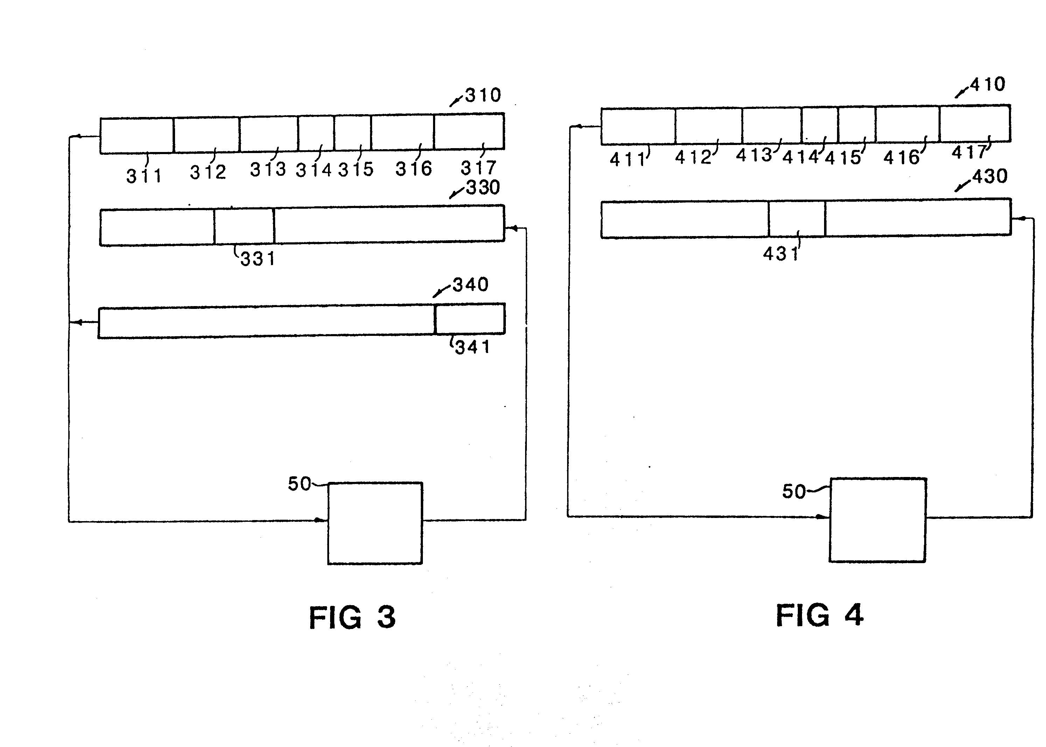

In Figure 3, ALU 50 processes bit patterns from a register 310 and a register 340 in order to deposit bits from a field 313 within register 310 into a register 330. Register 310 may, for instance, have 32 bits which are divided into seven fields. A field 311 contains six bits which designate an operation code, for instance a deposit instruction, which might be encoded as $011101_{base2}$.

A field 312 contains a 5-bit address which designates a general register into which will be deposited bits. The 5-bit address in field 312 allows the selection of one general register out of 32. In this case the general register selected is register 330.

Field 313 contains a 5-bit immediate field which is a source of bits to be deposited.

A field 314 contains a three-bit condition code. If the condition is "True" then, for example, the following instruction may be nullified. Table 1 above lists exemplary conditions.

A field 315 contains a three-bit code which indicates what type of deposit instruction is being performed. In this case, field 315 indicates that the instruction is a deposit of a variable number of bits contained within the instruction itself. This may be indicated, for example, by field 315 containing bits $101_{base\ 2}$.

A field 316 contains five unused bits. These bits may therefore all be set to zero.

A field 317 contains 5 bits which indicate the number of bits which are deposited from immediate field 313 to register 330. For instance, if the bits in field 317 contained the base 2 number 11100 (a complement length), then the four rightmost bits from immediate field 313 would be transferred, and a field 331 in register 330 would contain four bits. Field 331 is the location within register 330 into which is deposited the four rightmost bits from field 313.

Register 340 is a register which contains a bit position number representing the bit position of field 331 within register 330. The bit position number is located in a rightmost field 341 within register 340. The bit position number indicates the location of the rightmost bit of field 331 within register 330. For instance, when the rightmost bit number given in field 341 is twelve, then the rightmost bit of field 331 is in the twelfth bit position of register 330, where the leftmost bit position of register 330 is the zero bit position and the rightmost bit position of register 330 is the thirty-first bit position.

7

In Figure 4, ALU 50 processes bit patterns from a register 410 in order to deposit bits from a field 413 within register 410 into a register 430. Register 410 may, for instance, have 32 bits which are divided into seven fields. A field 411 contains six bits which designate an operation code, for instance a deposit instruction, which might be encoded as $011101_{base2}$.

A field 412 contains a 5-bit address which designates a general register into which will be deposited bits. The 5-bit address in field 412 allows the selection of one general register out of 32. In this case the general register selected is register 430.

Field 413 contains a 5-bit immediate field which is a source of bits to be deposited.

A field 414 contains a three-bit condition code. If the condition is "True" then, for example, the following instruction may be nullified. Table 1 above lists exemplary conditions.

A field 415 contains a three-bit code which indicates what type of deposit instruction is being performed. In this case, field 415 indicates that the instruction is a deposit of a number of bits which are located within the instruction itself. This may be indicated, for example, by field 415 containing bits $001_{base\ 2}$.

A field 416 contains five bits used as a bit position number representing the bit position of a field 431 within register 430. Field 431 is the location within register 430 into which is deposited bits from immediate field 413. The bit position number indicates the location of the rightmost bit of field 431 within register 430. For instance, when the rightmost bit number given in field 416 is seventeen, then the rightmost bit of field 431 is in the seventeenth bit position of register 430, where the leftmost bit position of register 430 is the zero bit position and the rightmost bit position of register 430 is the thirty-first bit position.

A field 417 contains 5 bits which indicate the number of bits which are deposited from field 413 into register 430. For instance, if the bits in field 417 contained the base 2 number 11011 (a complement length), then five bits from field 413 would be transferred to field 431 in register 430.

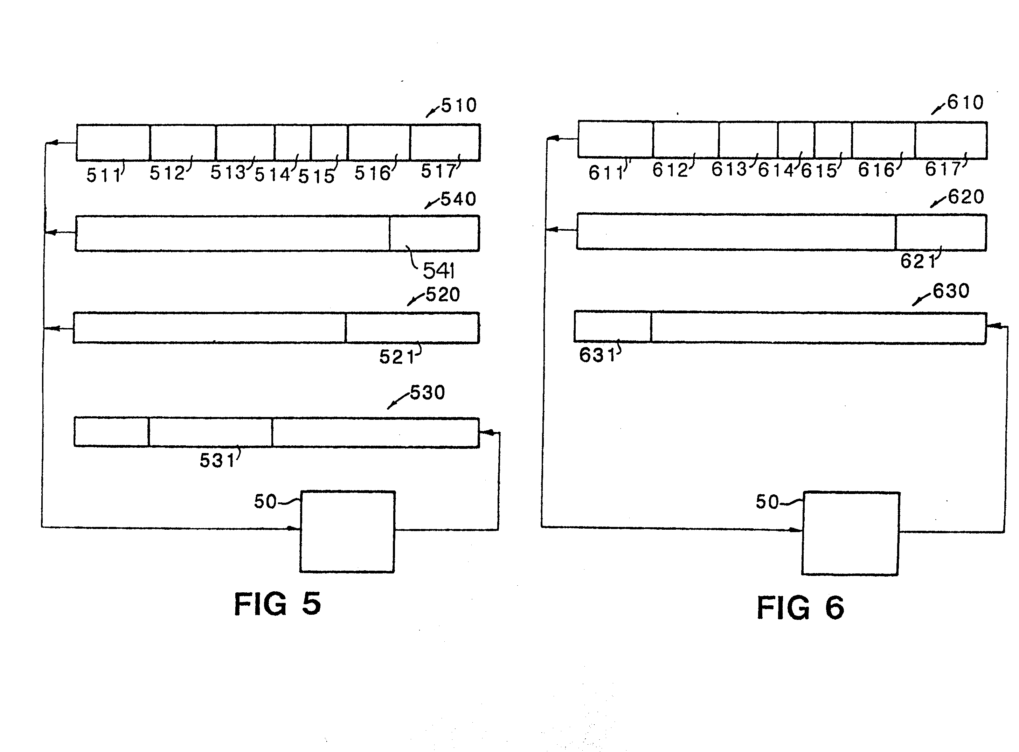

In Figure 5, an ALU 50 processes bit patterns from a register 510 and a register 540 in order to clear to zero all bits in a register 530 and to deposit bits from a register 520 into register 530. Register 510 may, for instance, have 32 bits which are divided into fields. A field 511 contains six bits which designate an operation code, for instance a deposit instruction, which might be encoded as $011101_{base2}$.

A field 512 contains a 5-bit address which designates a general register into which will be deposited bits. The 5-bit address in field 512 allows the selection of one general register out of 32. In this case the general register selected is register 530.

A field 513 contains a 5-bit address which designates a second general register which is a source of bits to be deposited. In this case the second general register selected is register 520. Bits selected out of register 520 may be selected from a set location. For instance, a rightmost field 521 within register 520 may be the set location.

A field 514 contains a three-bit condition code. If the condition is "True" then, for example, the following instruction may be nullified. Table 1 above lists exemplary conditions.

A field 515 contains a three-bit code which indicates what type of deposit instruction is being performed. In this case, field 515 indicates that the instruction zeros register 530 and deposits a variable number of bits therein. This may be indicated, for example, by field 515 containing bits $000_{base\ 2}$.

A field 516 contains five unused bits. These bits may therefore all be set to zero.

A field 517 contains 5 bits which indicate the number of bits which are deposited from register 520 into register 530. For instance, if the bits in field 517 contained the base 2 number 11010 (a complement length), then field 521 in register 520 would contain 6 bits and a field 531 in register 530 would also contain 6 bits. Field 531 is the location within register 530 into which register 520 deposits bits from field 521.

Register 540 is a register which contains a bit position number representing the bit position of field 531 within register 530. The bit position number is located in a rightmost field 541 within register 540. The bit position number indicates the location of the rightmost bit of field 531 within register 530. For instance, when the rightmost bit number given in field 541 is seventeen, then the rightmost bit of field 531 is in the seventeenth bit position of register 530, where the leftmost bit position of register 530 is the zero bit position and the rightmost bit position of register 530 is the thirty-first bit position.

In Figure 6, ALU 50 processes bit patterns from a register 610 in order to clear to zero all bits in a register 630 and to deposit bits from a register 620 into register 630. Register 610 may, for instance, have 32 bits which are divided into fields. A field 611 contains six bits which designate an operation code, for instance a deposit instruction, which might be encoded as $011101_{base2}$.

A field 612 contains a 5-bit address which designates a general register into which will be deposited bits. The 5-bit address in field 612 allows the selection of one general register out of 36. In this case the general register selected is register 630.

A field 613 contains a 5-bit address which designates a second general register which is a source of bits to be deposited. In this case the second general register selected is register 620. Bits selected out of register 620 may be selected from a set location. For instance, a rightmost field 621 within register 620 may be the set location.

A field 614 contains a three-bit condition code. If the condition is "True" then, for example, the following instruction may be nullified. Table 1 above lists exemplary conditions.

A field 615 contains a three-bit code which indicates what type of deposit instruction is being performed. In this case, field 615 indicates that the instruction zeros register 630 and deposits a number of bits therein. This may be indicated, for example, by field 615 containing bits $010_{\text{base }6}$.

A field 616 contains five bits used as a bit position number representing the bit position of a field 631 within a register 630. Field 631 is the location within register 630 into which register 620 deposits bits from field 621. The bit position number indicates the location of the rightmost bit of field 631 within register 630. For instance, when the rightmost bit number given in field 616 is nineteen, then the rightmost bit of field 631 is in the nineteenth bit position of register 630, where the leftmost bit position of register 630 is the zero bit position and the rightmost bit position of register 630 is the thirty-first bit position.

A field 617 contains 5 bits which indicate the number of bits which are deposited from field 621 into register 630. For instance, when the bits in field 617 contained the base 2 number 11010 (a complement length), then field 621 in register 620 contains 6 bits and field 631 in register 630 also contains 6 bits.

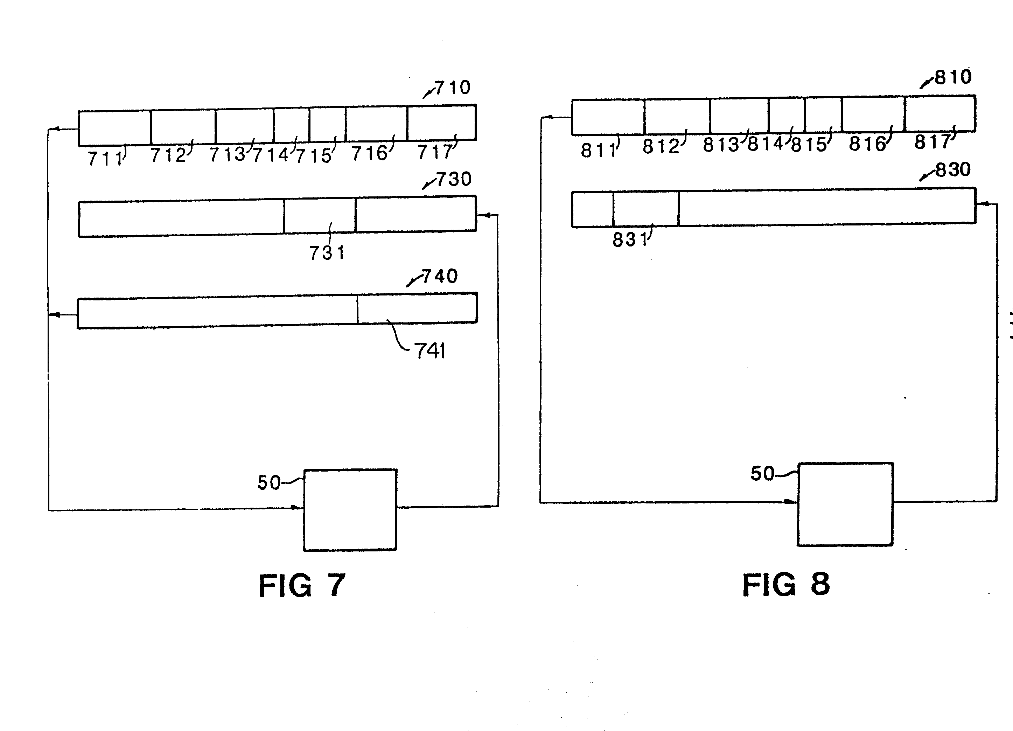

In Figure 7, ALU 50 processes bit patterns from a register 710 and a register 740 in order to zero all bits in a register 730 and to deposit bits from a field 713 within register 710 into a register 730. Register 710 may, for instance, have 32 bits which are divided into seven fields. A field 711 contains six bits which designate an operation code, for instance a deposit instruction, which might be encoded as $011101_{base2}$.

A field 712 contains a 5-bit address which designates a general register into which will be deposited bits. The 5-bit address in field 712 allows the selection of one general register out of 32. In this case the general register selected is register 730.

Field 713 contains a 5-bit immediate field which is a source of bits to be deposited.

A field 714 contains a three-bit condition code. If the condition is "True" then, for example, the following instruction may be nullified. Table 1 above lists exemplary conditions.

A field 715 contains a three-bit code which indicates what type of deposit instruction is being performed. In this case, field 115 indicates that the instruction zeros register 730 and deposits a variable number of bits therein which originate from instruction itself. This may be indicated, for example, by field 715 containing bits $101_{base\ 2}$.

A field 716 contains five unused bits. These bits may therefore all be set to zero.

A field 717 contains 5 bits which indicate the number of bits which are deposited from immediate field 713 to register 730. For instance, if the bits in field 717 contained the base 2 number 11100 (a complement length), then the four rightmost bits from immediate field 713 would be transferred, and a field 731 in register 730 would contain four bits. Field 731 is the

13

location within register 730 into which is deposited the four rightmost bits from field 713.

Register 740 is a register which contains a bit position number representing the bit position of field 731 within register 730. The bit position number is located in a rightmost field 741 within register 740. The bit position number indicates the location of the rightmost bit of field 731 within register 730. For instance, when the rightmost bit number given in field 741 is twelve, then the rightmost bit of field 731 is in the twelfth bit position of register 730, where the leftmost bit position of register 730 is the zero bit position and the rightmost bit position of register 730 is the thirty-first bit position.

In Figure 8, ALU 50 processes bit patterns from a register 810 in order clear to zero all bits in a register 830 and to deposit bits from a field 813 within register 810 into register 830. Register 810 may, for instance, have 32 bits which are divided into seven fields. A field 811 contains six bits which designate an operation code, for instance a deposit instruction, which might be encoded as $011101_{base2}$.

A field 812 contains a 5-bit address which designates a general register into which will be deposited bits. The 5-bit address in field 812 allows the selection of one general register out of 32. In this case the general register selected is register 830.

Field 813 contains a 5-bit immediate field which is a source of bits to be deposited.

A field 814 contains a three-bit condition code. If the condition is "True" then, for example, the following instruction may be nullified. Table 1 above lists exemplary conditions.

A field 815 contains a three-bit code which indicates what type of deposit instruction is being performed. In this case, field 815 indicates that the instruction clears to zero all bits within register and deposits therein bits which originate from the instruction itself. This may be indicated, for example, by field 115 containing bits

$110_{base\ 2}$.

A field 816 contains five bits used as a bit position number representing the bit position of a field 831 within register 830. Field 831 is the location within register 830 into which is deposited bits from immediate field 813. The bit position number indicates the location of the rightmost bit of field 831 within register 830. For instance, when the rightmost bit number given in field 816 is seventeen, then the rightmost bit of field 831 is in the seventeenth bit position of register 830, where the leftmost bit position of register 830 is the zero bit position and the rightmost bit position of register 830 is the thirty-first bit position.

A field 817 contains 5 bits which indicate the number of bits which are deposited from field 813 into register 830. For instance, if the bits in field 817 contained the base 2 number 11011 (a complement length), then five bits from field 813 would be transferred to field 831 in register 830.

15

We claim:

1.    In a computer architecture, a method comprising the steps of:

specifying in an instruction

an operation to deposit a plurality of bits into a first register,

an address of the first register, and

a length of the plurality of bits; and,

specifying in a second register separate from the instruction a location within the first register where the plurality of bits is to be deposited.


2.    A method as in claim 1 additionally comprising the step of:

specifying in the instruction the plurality of bits.


3.    A method as in claim 1 additionally comprising the step of:

specifying in a second register separate from the instruction an initial location of the plurality of bits.


4.    A method as in claim 1 additionally comprising the steps of:

clearing to zero all the bits within the first register; and,

depositing the plurality of bits into the first register.

16

5. In a computer architecture, a method comprising the steps of:

specifying in an instruction

an operation to deposit a plurality of bits into a first register,

an address of the first register, and

a length of the plurality of bits;

clearing to zero all the bits within the first register; and,

depositing the plurality of bits into the first register.

6. A method as in claim 5 additionally comprising the step of:

specifying in the instruction the plurality of bits.

7. A method as in claim 5 additionally comprising the step of:

specifying in a second register separate from the instruction an initial location of the plurality of bits.

8. An instruction for a computer comprising:

a field specifying a deposit operation;

a field specifying a first register to receive a first plurality of bits; and,

a field specifying the number of bits in the first plurality of bits.

17

a second register which contains a field specifying within the first register a first position which is to receive a least significant bit from the first plurality of bits.

9.  An instruction as in claim 8 additionally comprising a field specifying within the first register a first position which is to receive a least significant bit from the first plurality of bits.

10.  An instruction as in claim 8 wherein the instruction means additionally comprises a field which contains the first plurality of bits.

11.  An instruction as in claim 8 additionally comprising a second register which initially contains the first plurality of bits.

12.  A computing device comprising:

instruction means for controlling an operation of the computing device, the instruction means including:

means for specifying a deposit operation,

means for specifying a first register to receive a first plurality of bits, and

means for specifying the number of bits in the first plurality of bits; and,

alu means for, in response to the instruction means, depositing the first plurality of bits into the first register.

a second register which contains an address of a location within the first register where the field of bits is to be deposited, wherein the alu means deposits the first plurality of bits into the location.

13. A computing device as in claim 12 wherein the instruction means additionally comprises a location containing the first plurality of bits, and wherein the alu means receives the first plurality of bits from the initial location within the single instruction cycle.

14. A computing device as in claim 12 additionally comprising a second register which initially contains the first plurality of bits.

15. A computing device as in claim 12 wherein the alu means comprises:

clearing means for clearing to zero all bits within the first register; and,

depositing means for depositing the first plurality of bits into first register.

16. A computing device comprising:

instruction means for controlling an operation of the computing device, the instruction means including:

means for specifying a deposit operation,

means for specifying a first register to receive a first plurality of bits, and

means for specifying the number of bits in the first plurality of bits;

clearing means for clearing to zero all bits within the first register; and,

depositing means for depositing the first plurality of bits into first register.

17. A computing device as in claim 16 wherein the instruction means additionally comprises means for specifying a location within the first register where the field of bits is to be deposited, and wherein the depositing means deposits the first plurality of bits into the location within the single instruction cycle.

**FIG 1**

**FIG 2**

FIG 3

FIG 4

FIG 5

FIG 6

FIG 7

FIG 8

710
711 712 713 714 715 716 717
730
731
740
741
50

810
811 812 813 814 815 816 817
830
831
50

4/4

0207664